# EUROPÄISCHE PATENTSCHRIFT

(11) **EP 4 230 502 B1**
(45) Veröffentlichungstag und Bekanntmachung des Hinweises auf die Patenterteilung: **29.01.2025**
(21) Anmeldenummer: 22157933.7
(22) Anmeldetag: 22.02.2022
(51) Int. Cl.: B62D 1/181, F16H 57/04, F16H 25/24

(54) **VERSTELLANTRIEB FÜR EINE LENKSÄULE UND LENKSÄULE FÜR EIN KRAFTFAHRZEUG**
ADJUSTING DRIVE FOR A STEERING COLUMN AND STEERING COLUMN FOR A MOTOR VEHICLE
ENTRAÎNEMENT DE RÉGLAGE POUR UNE COLONNE DE DIRECTION ET COLONNE DE DIRECTION POUR UN VÉHICULE AUTOMOBILE

(43) Veröffentlichungstag der Anmeldung: 23.08.2023
(73) Patentinhaber: thyssenkrupp Presta Aktiengesellschaft, 9492 Eschen (LI); thyssenkrupp AG, 45143 Essen (DE)
(72) Erfinder: Huber, Sebastian, 6811 Göfis (AT); Specht, Jean-Pierre, 9469 Haag (CH)
(74) Vertreter: thyssenkrupp Intellectual Property GmbH

(56) Entgegenhaltungen:
- DE-A1- 102020 202 196

## Beschreibung

### Stand der Technik

Die Erfindung betrifft einen Verstellantrieb für eine Lenksäule für ein Kraftfahrzeug, umfassend eine Gewindespindel mit einem Außengewinde, das in ein korrespondierendes Innengewinde einer Spindelmutter eingreift, wobei ein des Außengewindes und eine Gewindenut des Innengewindes korrespondierende, gleitend axial gegeneinander abstützbare Gewindeflanken aufweisen. Weiterhin umfasst die Erfindung eine Lenksäule mit einem derartigen Verstellantrieb.

Eine motorisch verstellbare Lenksäule ist in ihrem in Fahrtrichtung vorderen Bereich über eine Trageinrichtung an der Fahrzeugkarosserie gehalten. Im hinteren, der Fahrerposition zugewandten Endbereich ist eine Lenkeingabe zur manuelle Eingabe von Lenkbefehlen angebracht, beispielsweise in um eine Längsachse drehbares Lenkrad. Das Lenkrad kann an einer um die Längsachse in einer Stelleinheit drehbar gelagerten Lenkspindel angebracht sein, die zur Realisierung einer Längsverstellung der Lenkeingabe relativ zur Fahrerposition in einer Manteleinheit, auch als Führungskasten, Außenmantelrohr oder Kastenschwinge bezeichnet, in der durch die Längsachse vorgegebenen Längsrichtung teleskopartig verschiebbar aufgenommen ist.

Eine Höhenverstellung der Lenkeingabe kann dadurch realisiert werden, dass die Stelleinheit oder eine diese aufnehmende Manteleinheit quer zur Längsachse auf und ab schwenkbar relativ zur Fahrzeugkarosserie gelagert ist.

Es ist im Stand der Technik bekannt, zur Verstellung einen motorischen Verstellantrieb mit einer Antriebseinheit mit einem Antriebsmotor vorzusehen, der - in der Regel über ein Getriebe - mit einem Spindeltrieb verbunden ist, der eine in eine Spindelmutter eingreifende Gewindespindel umfasst. Durch die Antriebseinheit sind die Gewindespindel und die Spindelmutter gegeneinander um die Spindelachse drehend antreibbar, wodurch diese je nach Drehrichtung in Richtung der Spindelachse translatorisch aufeinander zu oder voneinander weg bewegt werden können. In einer Ausführungsform, dem sogenannten Rotationsspindeltrieb, ist die Gewindespindel von der Antriebseinheit, die feststehend mit der Stelleinheit oder der Trageinheit verbunden ist, um ihre Spindelachse drehend antreibbar, und greift in die Spindelmutter ein, die an der verstellbaren Trageinheit oder der Stelleinheit bezüglich Drehung um die Spindelachse feststehend angebracht ist. Axial, d.h. in Richtung der Spindelachse, stützt sich die Gewindespindel an der Trageinheit oder der Stelleinheit ab, und die Spindelmutter entsprechend an der Stelleinheit oder der Trageinheit, so dass ein rotatorischer Antrieb der Gewindespindel eine translatorische Verstellung von Trageinheit und Stelleinheit relativ zueinander bewirkt. In einer alternativen Ausführungsform, die als Tauchspindeltrieb bezeichnet wird, ist die Gewindespindel bezüglich Drehung um die Spindelachse unverdrehbar mit der Trageinheit oder der Stelleinheit gekoppelt und die Spindelmutter ist drehbar, aber in Richtung der Spindelachse feststehend entsprechend an der Stelleinheit oder der Trageinheit gelagert. Wie in der ersten Ausführungsform stützt sich die Gewindespindel in Richtung der Spindelachse axial an der Trageinheit oder der Stelleinheit ab, und die Spindelmutter entsprechend an der Stelleinheit oder der Trageinheit, so dass die Gewindespindel durch die Antriebseinheit in Richtung der Spindelachse translatorisch verschiebbar ist. In beiden Ausführungen weist der Verstellantrieb einen zwischen Trageinheit und Stelleinheit wirksamen motorischen antreibbaren Spindeltrieb auf, durch den die Stelleinheit relativ zur Trageinheit verstellt werden kann. Ein gattungsgemäßer Verstellantrieb ist beispielsweise in der DE 10 2017 207 561 A1 und der DE 10 2020 202 196 A1, welche ebenfalls den Oberbegriff des unabhängigen Anspruchs offenbart, beschrieben.

Zur Realisierung einer Längsverstellung der Stelleinheit in Richtung der Längsachse kann ein Spindeltrieb eines Verstellantriebs zwischen der Stelleinheit und einer diese axial längsverschieblich aufnehmenden Manteleinheit angeordnet sein, welche mit der Trageinheit verbunden ist, und wobei die Spindelachse im Wesentlichen parallel zur Längsachse ausgerichtet sein kann.

Zur Höhenverstellung kann ein Verstellantrieb zwischen der Trageinheit und einer daran höhenverstellbar gelagerten Stelleinheit angeordnet sein.

An einer Lenksäule können eine motorische Längs- und Höhenverstellung einzeln oder in Kombination ausgebildet sein.

In dem Spindeltrieb werden die axial gegeneinander anliegenden Gewindeflanken, dies sind die Zahnflanken am Gewindezahn des Außengewindes der Gewindespindel und die korrespondierenden Nutflanken in der Gewindenut des Innengewindes, mit der axialen Verstellkraft gegeneinander belastet und bei Verstellen in Umfangsrichtung relativ zueinander gleitend bewegt. Um die Reibungsverluste und Verschleiß gering zu halten, wird zur Verringerung der Reibung ein Schmiermittel eingebracht, zumeist Schmierfett. Das Schmiermittel haftet an der Gewindespindel und der Spindelmutter an. Dadurch werden bei der Verstellung zur Justierung der Lenkradposition die im Gleitkontakt stehenden Kontaktbereiche an den Gewindeflanken des Gewindes praktisch über die gesamte Lebensdauer ausreichend geschmiert. Eine häufigere Verstellung tritt beispielsweise beim autonomen Fahren dadurch auf, dass die Lenksäule beim Wechsel zwischen manuellem und autonomem Fahrbetrieb aus der Betriebsposition in eine Verstauposition eingefahren wird, und umgekehrt. Eine derartige automatisierte Verstellung wird auch beim konventionellen Fahrbetrieb zur Verbesserung des Komforts beim Ein- und Aussteigen realisiert.

Durch die häufige Betätigung kann das Schmiermittel von den unmittelbar in Reibkontakt stehenden Gewindeflanken zwischen dem Gewindezahn und der korrespondierenden Gewindenut verdrängt werden, und sich an anderer Stelle des Spindeltriebs sammeln. Dadurch kann die Schmierung beeinträchtigt werden, und es können erhöhte Reibung und Verschleiß auftreten.

Angesichts der vorangehend erläuterten Problematik ist es eine Aufgabe der vorliegenden Erfindung, die Schmierung zu verbessern und Reibung und Verschleiß zu verringern.

### Darstellung der Erfindung

Diese Aufgabe wird erfindungsgemäß gelöst durch den Verstellantrieb mit den Merkmalen des Anspruchs 1 und die Lenksäule gemäß Anspruch 13. Vorteilhafte Weiterbildungen ergeben sich aus den Unteransprüchen.

Bei einem Verstellantrieb für eine Lenksäule für ein Kraftfahrzeug, umfassend eine Gewindespindel mit einem Außengewinde, das in ein korrespondierendes Innengewinde einer Spindelmutter eingreift, wobei ein des Außengewindes und eine Gewindenut des Innengewindes korrespondierende, gleitend axial gegeneinander abstützbare Gewindeflanken aufweisen, ist erfindungsgemäß vorgesehen, dass mindestens eine Gewindeflanke mindestens eine vertiefte Schmiermittelaufnahme aufweist.

Das Außengewinde weist einen zumindest abschnittweise schraubenförmig, helikal umlaufenden Gewindezahn auf, der auf seinen beiden axialen Flächen als Gewindeflanke jeweils eine Zahnflanke hat. Die Gewindenut des Innengewindes weist axial beidseitig Nutflanken auf, welche mit den Zahnflanken korrespondierende Gewindeflanken darstellen. Je nach Verstellrichtung wird die Reibpaarung im Kontaktbereich von korrespondierenden Gewindeflanken mit der axialen Verstellkraft des Verstellantriebs belastet. Es ist möglich, dass die erfindungsgemäß ausgestalteten Gewindeflanken eine Zahnflanke des Gewindezahns und/oder eine Nutflanke einer Gewindenut umfassen.

Erfindungsgemäß kann eine Schmiermittelaufnahme, die gleichbedeutend auch als Schmiermittelaufnahmevertiefung bezeichnet werden kann, als Vertiefung oder konkave Einformung ausgebildet sein, beispielsweise in Form einer Schmiermitteltasche oder -mulde. Die Schmiermittelaufnahme ist in die Oberfläche der Gewindeflanke, die auch als Flankenfläche bezeichnet wird, in dem Kontaktbereich eingebracht, in dem im Gewindeeingriff Zahnflanke und Nutflanke in Gleitkontakt kommen können. Dadurch, dass die Schmiermittelaufnahme zumindest teilweise mit einem Schmiermittel gefüllt sein kann, bildet sie ein offenes Schmiermittelreservoir, d.h. einen Schmiermittelspeicher, der in dem Kontaktbereich der Gewindeflanke angeordnet ist.

Ein Vorteil der Erfindung ist, dass in dem Schmiermittelspeicher ein größerer Schmiermittelvorrat gespeichert werden kann, aus dem Schmiermittel direkt in den Kontaktbereich zwischen die dort gegeneinander im Reibkontakt stehenden Gewindeflanken abgegeben werden kann. Dadurch, dass der Schmierfilm im Kontaktbereich relativ dünn ist, und auch nur durch die axiale Belastung herausgequetschtes Schmiermittel ersetzt werden muss, kann durch das in der erfindungsgemäßen Schmiermittelaufnahme aufgenommene Schmiermittel eine langanhaltende, bevorzugt über die gesamte Lebensdauer ausreichende Schmierung des Spindeltriebs gewährleistet werden. Dies gilt auch für Anwendungen mit besonders häufiger Verstellung der Lenksäule, wie beispielsweise einer Steer-by-Wire-Lenksäule für autonomen Fahrbetrieb, oder bei anderen automatisierten Komfortfunktionen. Dadurch wird die Reibung und der Verschließ wirksam reduziert, so dass ein langfristiger störungsfreier Betrieb gewährleistet ist.

Im Betrieb ist die Schmiermittelaufnahme mit einem Schmiermittel gefüllt, bevorzugt mit einem Schmierfett. Das Schmiermittel kann eine angepasste, höhere Viskosität haben, so dass unter den üblicherweise zu erwartenden Betriebsbedingungen eine jederzeit ausreichende, aber nicht zu große Schmiermittelmenge aus der Schmiermittelaufnahme in den Kontaktbereich gelangt. Die Füllung mit Schmiermittel kann bevorzugt bereits bei der Montage des Verstellantriebs erfolgen, wodurch ein langfristig problemfreier Betrieb gewährleistet werden kann.

Es ist vorteilhaft, dass die Schmiermittelaufnahme axial einseitig offen ausgebildet ist.

Dadurch wird eine konkave Einformung oder Vertiefung ausgebildet, die nur zum Kontaktbereich der Gewindeflanke hin eine Öffnung aufweist. Diese Öffnung wird im Gewindeeingriff durch die im Kontaktbereich gleitend anliegende, axial gegenüberliegende Gewindeflanke abgedeckt bzw. geschlossen. Beispielsweise wird eine in eine Zahnflanke eingebrachte Schmiermittelaufnahme durch die korrespondierende Nutflanke abgedeckt. Dadurch wird sichergestellt, dass das Schmiermittel zuverlässig und dosiert zwischen die Gewindeflanken gelangen kann.

Es kann vorgesehen sein, dass in einer Gewindeflanke jeweils eine Mehrzahl von Schmiermittelaufnahmen ausgebildet ist. Beispielsweise können mehrere Schmiermittelaufnahmen jeweils in Umfangsrichtung über die gesamte Länge der Gewindespindel, die mit der Spindelmutter beim Verstellen in Eingriff kommen kann, jeweils mit Abstand zueinander verteilt angeordnet sein. Dadurch kann eine gleichmäßige, zuverlässige Verteilung des Schmiermittels gewährleistet werden.

Eine bevorzugte Ausführung kann dadurch realisiert sein, dass die Schmiermittelaufnahme eine langgestreckte Schmiernut aufweist. Eine Schmiernut bildet einen offenen Schmierkanal, der rinnen- oder rillenförmig in eine Gewindeflanke eingeformt sein kann. Ein Vorteil dabei ist, dass durch die in Umfangsrichtung und/oder in Radialrichtung langgestreckte Form das Schmiermittel über einen größeren Kontaktbereich abgegeben werden kann. Dabei kann sich das Schmiermittel längs innerhalb der Schmiernut verteilen, so dass eine vergleichmä-βigte, zuverlässige Schmierung auch unter hoher Belastung erfolgt.

Eine vorteilhafte Weiterbildung der vorgenannten Ausführung ist, dass die Schmiernut zumindest abschnittweise spiralförmig ausgebildet ist. In dem spiralförmigen Verlauf erstreckt sich die Schmiernut gegen die Längsachse der Spindel bzw. des Gewindes geneigt bogenförmig in radialer Richtung. Die Schmiernut kann dabei in der durch die Gewindeflanke gebildeten helikalen Axialfläche ähnlich wie eine Gewinderille eines Flachgewindes bogenförmig radial von innen nach außen verlaufend ausgebildet sein. Am Außengewinde kann sich eine Schmiernut vom Fußkreis des Außengewindes der Gewindespindel, entsprechend dem Kerndurchmesser des Außengewindes, bevorzugt bis zum Zahnkopf, entsprechend dem Außendurchmesser des Außengewindes erstrecken, d.h über die radiale Höhe des Gewindezahns. Analog kann sich eine Schmiernut im Innengewinde der Spindelmutter vom Grundkreis der Gewindenut in der Nutflanke, d.h. vom Außendurchmesser bogenförmig radial nach innen verlaufen, bevorzugt bis zum Innendurchmesser des Innengewindes, d.h. über die radiale Höhe der Gewindenut. Ein Vorteil ist, dass eine Gewindenut einen größeren Umfangs- und Radialabschnitt der Kontaktfläche mit Schmiermittel versorgen kann. Ein weiterer Vorteil ist, dass bei einer relativen Drehung von Gewindespindel und Spindelmutter in einer gegebenen Drehrichtung das Schmiermittel in radialer Richtung in der Schmiernut entlang gefördert wird, ähnlich dem Wirkprinzip einer Spiralpumpe. Je nach Drehrichtung und Drehsinn der Spiralform kann Schmiermittel radial von innen nach außen oder umgekehrt gepumpt werden. Dadurch ist eine optimierte Verteilung des Schmiermittels ermöglicht. Insbesondere kann Schmiermittel, welches im Laufe der Betriebszeit radial aus dem Kontaktbereich herausgepresst worden ist, über die spiralförmige Schmiernut wieder zur Schmierung in den Kontaktbereich zurück gefördert werden. Dadurch kann ein Schmiermittelverlust verringert und eine langfristige, optimierte Schmierung realisiert werden.

Der spiralförmige Verlauf kann bevorzugt vorsehen, dass eine Schmiernut sich in einem Umfangs-Teilabschnitt von weniger als 360° über die radiale Höhe des Gewindezahns oder der Gewindenut erstreckt. Auf diese Weise können bevorzugt zwei oder mehr Schmiernuten mit Abstand in Umfangsrichtung pro Umlauf verteilt angeordnet sein. Dabei kann jede Schmiernut in der Art eines Spiralarms ausgebildet sein.

Bevorzugt kann eine Vielzahl von spiralartigen Schmiernuten über die gesamte Länge des Außengewindes und/oder des Innengewindes verteilt angeordnet sein.

Weiterhin kann es vorteilhaft sein, dass zwei Schmiernuten gegensinnig spiralförmig ausgebildet sind. Beispielsweise kann die eine, erste Schmiernut bei einem Umlauf einer Drehrichtung, beispielsweise im Uhrzeigersinn, spiralförmig von innen nach außen verlaufen, und die andere, gegensinnige Schmiernut in derselben Drehrichtung von außen nach innen. Bei einer relativen Drehung von Gewindespindel und Spindelmutter in einer gegebenen Drehrichtung kann das Schmiermittel in der einen Schmiernut von innen nach außen gefördert werden, und gleichzeitig in der anderen, gegensinnigen Schmiernut von außen nach innen. Dadurch kann sowohl radial nach innen als auch nach außen aus dem Kontaktbereich ausgetretenes Schmiermittel wieder in den Kontaktbereich zurück gefördert werden, so dass die Schmierung weiter optimiert wird.

Gegensinnige Schmiernuten können jeweils an einem Gewindezahn oder einer Gewindenut ausgebildet sein, oder auch an einem Gewindezahn gegensinnig zu einer korrespondierenden Gewindenut. Insbesondere ist es denkbar und möglich, dass gegensinnige Schmiermuten an gegeneinander im Gleitkontakt anliegenden Zahn- und Nutflanken angeordnet sind.

Es ist möglich, dass Schmiermittelaufnahmen auf einer oder den beiden Zahnflanken eines Gewindezahns und/oder auf einer oder den beiden Nutflanken einer Gewindenut angeordnet sind. Dadurch, dass erfindungsgemäße Schmiermittelaufnahmen wahlweise nur am Gewindezahn oder in der Gewindenut, oder am Gewindezahn und an der Gewindenut realisiert sind, kann die Schmiermittelverteilung an die jeweiligen Anforderungen angepasst werden. Zusätzlich können Schmiermittelaufnahmen wahlwiese axial einseitig oder beidseitig an den Gewindeflanken von Gewindenut und Gewindezahn vorgesehen sein. Dadurch kann eine weitere Optimierung der Schmiermittelverteilung ermöglich werden, beispielsweise, um es im Bereich des Innengewindes zu halten.

Der Zahnkopf, der durch die bevorzugt zylindrische äußere Umfangsfläche der Gewindespindel begrenzt wird, ist bevorzugt über die Länge der Gewindespindel glatt ausgebildet und weist keine radialen Einformungen oder dergleichen auf. Dadurch kann verhindert werden, dass sich Schmiermittel übermäßig außerhalb der Gewindeflanken radial zwischen dem Zahnkopf des Gewindezahns und dem Nutgrund der Gewindenut ansammelt.

Bevorzugt können die Gewindespindel und/oder die Spindelmutter einen Kunststoff aufweisen. Die Gewindespindel im Bereich des Gewindezahns, und/oder die Spindelmutter im Bereich der Gewindenut können zumindest abschnittweise aus einem Kunststoff ausgebildet sein. Dadurch können vorteilhafte Gleiteigenschaften realisiert werden. Vorteilhaft ist eine Fertigung aus einem thermoplastischen Polymer im Kunststoff-Spritzguss. Dies ermöglicht eine fertigungstechnisch einfache Realisierung der Schmiermittelaufnahmen. Beispielsweise können Schmiernuten mittels eines relativ einfach aufgebauten Formwerkzeugs in einen Gewindezahn oder eine Gewindenut eingeformt werden, welches eine einfache Zwangsentformung des fertigen Spritzgussteils aus einem Spritzgusswerkzeug erlaubt, welches im Prinzip genauso einfach aufgebaut sein kann, wie im Stand der Technik ohne erfindungsgemäße Schmiermittelaufnahmen.

Zusätzlich oder alternativ kann vorgesehen sein, dass die Gewindespindel und/oder die Spindelmutter einen metallischen Werkstoff aufweisen. Die Gewindespindel im Bereich des Gewindezahns, und/oder die Spindelmutter im Bereich der Gewindenut können zumindest abschnittweise aus einem metallischen Werkstoff ausgebildet sein, wie beispielsweise aus Stahl oder Buntmetall.

Die Gewindespindel und/oder die Spindelmutter können einen Kern aus einem metallischen Werkstoff aufweisen, der zumindest abschnittweise im Bereich der Zahnflanken oder Nutflanken mit einem Kunststoff beschichtet ist. Beispielsweise kann ein derartiger Metallkern im Bereich des Gewindes mit einem thermoplastischen Polymer umspritzt sein. Dadurch kann eine hohe Steifigkeit bei geringer Reibung realisiert werden.

Dadurch kann zwischen den gegeneinander anliegenden Gewindeflanken eine reibungs- und verschließarm optimierte Materialpaarung realisiert werden, bevorzugt als Metall-Kunststoff-Kombination oder Kunststoff-Kunststoff-Kombination.

Zur Realisierung einer automatisierten Verstellung ist bevorzugt vorgesehen, dass eine motorische Antriebseinheit mit der Gewindespindel oder der Spindelmutter derart gekoppelt ist, dass die Gewindespindel und die Spindelmutter relativ zueinander drehend antreibbar sind. Die Antriebseinheit umfasst einen elektrischen Motor, der zum drehenden Antrieb mit der Gewindespindel oder der Spindelmutter gekuppelt ist, beispielsweise über ein Schneckengetriebe oder dergleichen. Die elektrische Ansteuerung des Motors durch eine Steuereinheit des Kraftfahrzeugs ermöglich eine automatisierte Verstellung.

Bei einer Lenksäule für ein Kraftfahrzeug, mit einer Trageinheit, die an einer Fahrzeugkarosserie anbringbar ist, und von der eine Stelleinheit gehalten ist, in der eine Lenkspindel drehbar gelagert ist, und mit einem Verstellantrieb, der eine Gewindespindel, die mit einem Außengewinde in eine Spindelmutter eingreift, und eine Antriebseinheit umfasst, der mit der Gewindespindel oder der Spindelmutter derart gekoppelt ist, dass die Gewindespindel und die Spindelmutter relativ drehend zueinander antreibbar sind, wobei der Verstellantrieb mit der Trageinheit oder der Stelleinheit verbunden ist, ist erfindungsgemäß vorgesehen, dass der Verstellantrieb ausgebildet ist gemäß einer oder Kombinationen der vorangehend beschriebenen Ausführungsformen.

Durch die erfindungsgemäße Ausgestaltung des oder der Verstellantriebe kann ein zuverlässiger und wartungsfreier Betrieb über die Lebensdauer der Lenksäule realisiert sein, insbesondere auch bei häufiger Verstellung.

Der Verstellantrieb kann zur Anpassung an die jeweiligen Gegebenheiten in an sich bekannter Weise als Rotationsspindeltrieb oder als Tauchspindeltrieb ausgebildet sein.

Es ist vorteilhaft, dass die erfindungsgemäße Lenksäule als Steer-by-wire-Lenksäule ausgebildet ist. Dabei handelt es sich um eine elektrische Lenkeingabeeinrichtung, bei der die manuelle Lenkhandhabe nicht mechanisch mit den zu lenkenden Rädern verbunden ist, sondern mit Drehwinkel- bzw. Drehmomentsensoren zusammenwirkt, die den manuell eingegebenen Lenkbefehl erfassen und daraus ein elektrisches Steuersignal erzeugen und an einen Lenksteller abgeben, der mittels eines elektrischen Stellantriebs einen dem Lenkbefehl entsprechenden Lenkeinschlag der Räder einstellt. Derartige Lenksysteme können bevorzugt in autonom betriebenen Fahrzeugen eingesetzt werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1 aus einem anderen Betrachtungswinkel,
- Figur 3: ein erfindungsgemäßer Verstellantrieb in einer schematischen perspektivischen Darstellung,
- Figur 4: eine erfindungsgemäße Gewindespindel in einer perspektivischen Darstellung,
- Figur 5: eine erfindungsgemäße Gewindespindel in einer vergrößerten perspektivischen Darstellung,
- Figur 6: Darstellung einer erfindungsgemäßen Gewindespindel in einer durch die Längsachse geschnittenen Teilansicht.

### Ausführungsformen der Erfindung

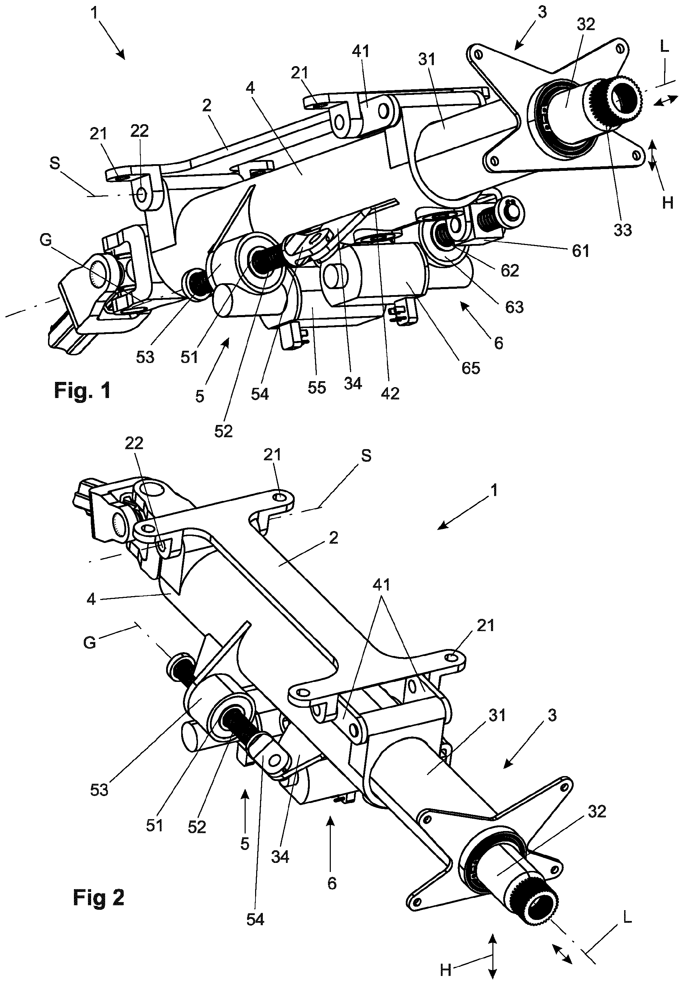

In den verschiedenen Figuren sind gleiche Teile stets mit den gleichen Bezugszeichen versehen und werden daher in der Regel auch jeweils nur einmal benannt bzw. erwähnt. Figur 1 zeigt eine erfindungsgemäße Lenksäule 1 in einer schematischen perspektivischen Ansicht von unten links schräg auf das hintere Ende, bezogen auf die Fahrtrichtung eines nicht dargestellten Fahrzeugs, wo rechts in der Darstellung ein hier nicht dargestelltes Lenkrad im Bedienungsbereich gehalten wird. Figur 2 zeigt die Lenksäule 1 in einer Ansicht von der gegenüberliegenden Seite, also von oben links gesehen.

Die Lenksäule 1 umfasst eine Trageinheit 2, welche als Konsole ausgebildet ist, die Befestigungsmittel 21 in Form von Befestigungsbohrungen aufweist, zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet - aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen Stellhebel 41 mit der Trageinheit 2 verbunden. Durch eine Drehung des Stellhebels 41 kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Ein erster Verstellantrieb 5 zur Längsverstellung der Stelleinheit 3 relativ zur Manteleinheit 4 in Richtung der Längsachse L weist einen Spindeltrieb mit einer Spindelmutter 51 auf, in die eine sich längs einer Gewindeachse G, der Spindelachse, erstreckenden Gewindespindel 52 eingreift, also mit ihrem Außengewinde in das korrespondierende Innengewinde der Spindelmutter 51 eingeschraubt ist. Die Gewindeachse G verläuft im Wesentlichen parallel zur Längsachse L.

Die Spindelmutter 51 ist um die Gewindeachse G drehbar in einem Lagergehäuse 53 gelagert, welches fest mit der Manteleinheit 4 verbunden ist. In Richtung der Gewindeachse G ist die Spindelmutter 51 axial über das Lagergehäuse 53 an der Manteleinheit 4 abgestützt. Der Verstellantrieb 5 ist entsprechend ein sogenannter Tauchspindelantrieb.

Die Gewindespindel 52 ist mit einem an ihrem hinteren Ende ausgebildeten Befestigungselement 54 über ein Übertragungselement 34 mit der Stelleinheit 3 verbunden, und zwar fest in Richtung der Achse G bzw. der Längsachse L und feststehend bezüglich Drehung um die Achse G. Durch die drehend antreibbare Spindelmutter 51 und die bezüglich Drehung feststehende Gewindespindel 52 wird ein sogenannter Tauchspindelantrieb realisiert.

Dass Übertragungselement 34 erstreckt sich von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der Verstellantrieb 5 weist einen elektrischen Antriebsmotor 55 auf, von dem die Spindelmutter 51 bezüglich der Achse G relativ zur feststehenden Gewindespindel 52 drehend antreibbar ist. Dadurch kann - je nach Drehrichtung des Antriebsmotors 55 - die Gewindespindel 52 in Richtung der Gewindeachse G translatorisch relativ zur Spindelmutter 51 verlagert werden, so dass entsprechend die mit der Gewindespindel 52 verbundene Stelleinrichtung 3 relativ zu der mit der Spindelmutter 51 verbundenen Manteleinheit 4 in Richtung der Längsachse L verstellt wird.

In Figur 1 ist weiter erkennbar, wie ein zweiter Verstellantrieb 6 zur Verstellung in Höhenrichtung H an der Lenksäule 1 angebracht ist. Dieser Verstellantrieb 6 umfasst eine Spindelmutter 61, in die eine Gewindespindel 62 eingreift. Die Gewindespindel 62 ist in einem Lagergehäuse 63, welches an der Manteleinheit 4 befestigt ist, drehbar um die Achse G gelagert und axial an der Manteleinheit 4 abgestützt, und von einem elektrischen Antriebsmotor 65 wahlweise in beide Rotationsrichtungen um die Achse G drehend antreibbar. Entsprechend handelt es sich bei dem Verstellantrieb 6 um einen sogenannten Rotationsspindelantrieb.

Die Spindelmutter 61 ist bezüglich einer Drehung um ihre Gewindeachse feststehend an dem Stellhebel 41 angebracht, der um ein Schwenklager drehbar an der Trageinheit 2 gelagert ist, und dessen anderer Arm mit dem anderen Ende mit der Manteleinheit 4 verbunden ist.

Durch Drehung der Gewindespindel 61 kann - je nach Drehrichtung des Antriebsmotors 65 - die Spindelmutter 61 translatorisch relativ zur Gewindespindel 52 verlagert werden, so dass entsprechend die über den Stellhebel 41 mit der Spindelmutter 41 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet.

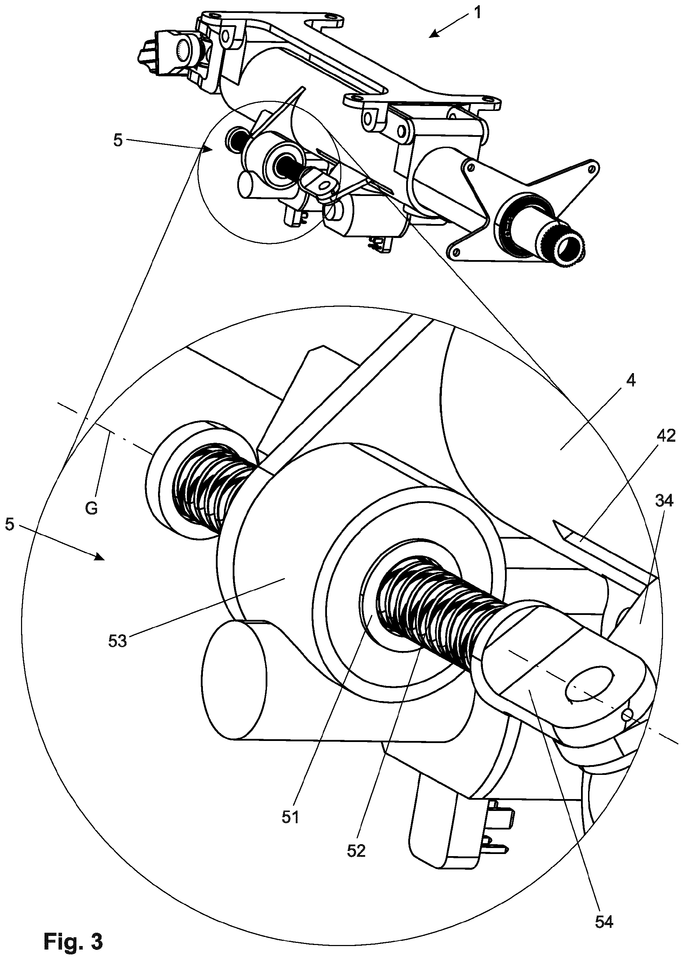

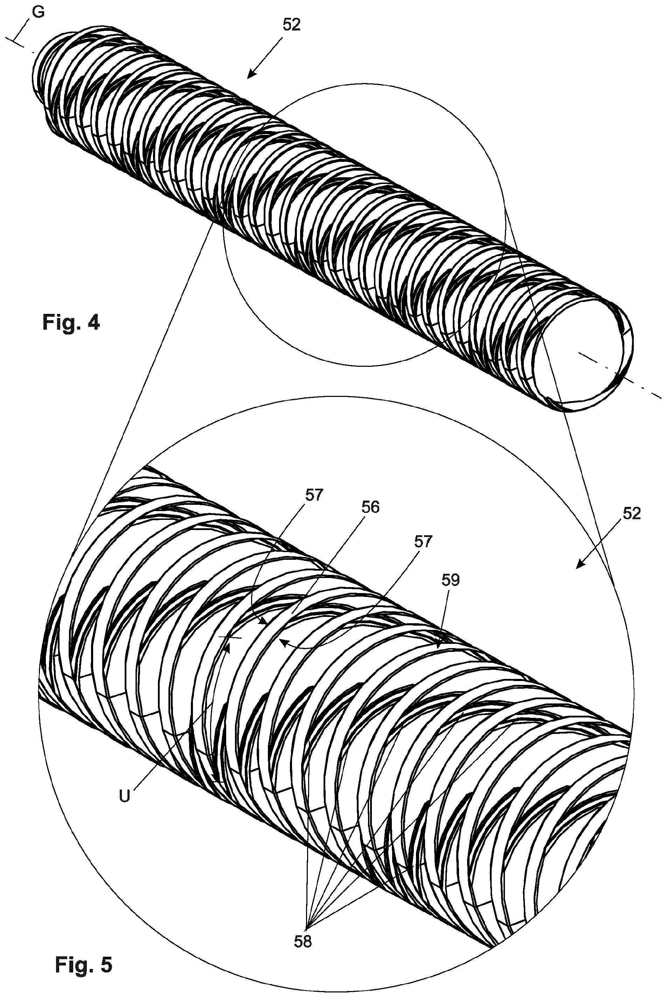

Figur 3 zeigt den als Tauchspindelantrieb ausgebildeten Verstellantrieb 5 in vergrößerter Darstellung. Figur 4 zeigt die erfindungsgemäß ausgestaltete Gewindespindel 51 separat freigestellt in einer vergrößerten Darstellung, und Figur 5 zeigt eine nochmals vergrößerte Detaildarstellung aus Figur 4.

Die Gewindespindel 51 weist einen schraubenförmig umlaufenden Gewindezahn 56 auf. Dieser weist zwei axiale Gewindeflanken 57 auf, welche die Zahnflanken bilden. In die in Figur 5 sichtbare, dem Betrachter zugewandte Gewindeflanke 57 ist eine Vielzahl von Schmiernuten 58 auf, die rinnenförmige, konkav eingeformte Schmiermittelaufnahmen im Sinne der Erfindung bilden.

Die Schmiernuten 58 haben, über den Außendurchmesser der Gewindespindel 51 in Umfangsrichtung gemessen, jeweils einen Abstand U voneinander. Im dargestellten Beispiel haben sämtliche, über die Längserstreckung der Gewindespindel verteilt angeordneten Schmiernuten 56 jeweils die gleichen Abstände U. Es ist aber auch denkbar und möglich, dass unterschiedliche Abstände U vorgesehen sein können.

Der Zahnkopf 590, der durch die zylindrische äußere Umfangsfläche der Gewindespindel 51 begrenzt wird, weist keine radialen Einformungen auf.

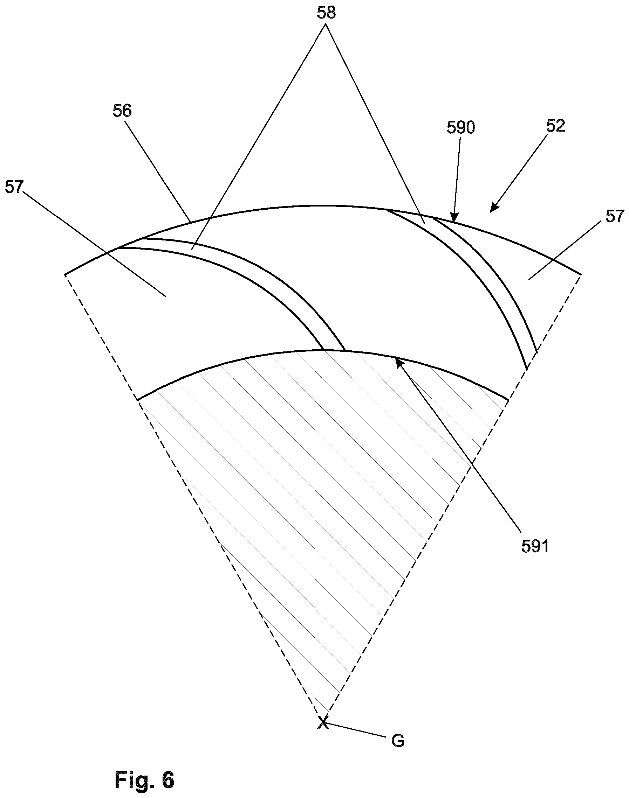

Figur 6 zeigt eine schematische axiale Teilansicht auf einen Umfangsabschnitt der Zahnflanke 57. Darin ist der bogenförmige, spiralartige Verlauf der Schmiernuten 58 erkennbar. Anders ausgedrückt sind sie ähnlich wie Spiralarme geformt, wobei diese - wie in Figur 5 eingezeichnet - jeweils einen Abstand U in Umfangsrichtung haben. Im gezeigten Beispiel verlaufen sie vom Zahnfuß 591 bis zum Zahnkopf 590 über die gesamte radiale Höhe des Gewindezahns 56. Dabei sind sie in ihrem Verlauf radial von innen nach außen entgegen dem Uhrzeigersinn bogenförmig geschwungen.

Im montierten, betriebsbereiten Zustand des Verstellantriebs 5 sind die Schmiernuten 58 zumindest teilweise mit einem Schmiermittel gefüllt, bevorzugt mit einem Schmierfett.

Es ist möglich, dass auf der in Figuren 4 und 5 dem Betrachter abgewandten axialen Zahnflanke 57 ebenfalls Schmiernuten 58 oder anders geformte Schmiermittelaufnahmen im Sinne der Erfindung ausgebildet sind.

In den hier nicht gezeigten Nutflanken der Gewindenut des Innengewindes der Spindelmutter 51 können zusätzlich oder alternativ im Prinzip gleichartig gestaltete Schmiernuten 58 ausgebildet sein.

Die Gewindespindel 52 und die Spindelmutter 51 können aus einem metallischen Werkstoff ausgebildet sein, und/oder aus einem Kunststoff. Es ist vorteilhafte, dass die Gewindespindel 52 zumindest im Bereich der Zahnflanken 57 des Gewindezahns 56 aus einem Kunststoff ausgebildet ist, bevorzugt einem thermoplastischen Polymer. Dieses kann als Spritzgussteil ausgebildet sein, mit dem beispielsweise ein metallischer Kern umspritzt ist. Die Schmiernuten 58 können bevorzugt im Kunststoff-Spritzguss in die Zahnflanken 57 eingeformt sein.

### Bezugszeichenliste

- 1: Lenksäule
- 2: Trageinheit
- 21: Befestigungsmittel
- 22: Schwenklager
- 3: Stelleinheit
- 31: Mantelrohr
- 32: Lenkspindel
- 34: Übertragungselement
- 4: Manteleinheit
- 41: Stellhebel
- 42: Durchgangsöffnung
- 5, 6: Verstellantrieb
- 51, 61: Spindelmutter
- 52, 62: Gewindespindel
- 53, 63: Lagergehäuse
- 54: Befestigungselement
- 55, 65: Antriebsmotor
- 56: Gewindezahn
- 57: Zahnflanke
- 58: Schmiernut
- 590: Zahnkopf
- 591: Zahnfuß

- L: Längsachse
- H: Höhenrichtung
- G: Gewindeachse
- U: Abstand

## Patentansprüche

1. Verstellantrieb (5) für eine Lenksäule (1) für ein Kraftfahrzeug, umfassend eine Gewindespindel (52) mit einem Außengewinde, das in ein korrespondierendes Innengewinde einer Spindelmutter (51) eingreift, wobei ein Gewindezahn (56) des Außengewindes und eine Gewindenut des Innengewindes korrespondierende, gleitend axial gegeneinander abstützbare Gewindeflanken (57) aufweisen,
**dadurch gekennzeichnet,**
**dass** mindestens eine Gewindeflanke (57) mindestens eine vertiefte Schmiermittelaufnahme (58) aufweist.

2. Verstellantrieb nach Anspruch 1, **dadurch gekennzeichnet, dass** die Gewindeflanken eine Zahnflanke (57) des Gewindezahns (56) und/oder eine Nutflanke einer Gewindenut umfassen.

3. Verstellantrieb nach einem der vorangehenden Ansprüche, **dadurch gekennzeichnet, dass** die Schmiermittelaufnahme (58) axial einseitig offen ausgebildet ist.

4. Verstellantrieb nach einem der vorangehenden Ansprüche, **dadurch gekennzeichnet, dass** in einer Gewindeflanke (57) jeweils eine Mehrzahl von Schmiermittelaufnahmen (58) ausgebildet ist.

5. Verstellantrieb nach einem der vorangehenden Ansprüche, **dadurch gekennzeichnet, dass** die Schmiermittelaufnahme (58) eine langgestreckte Schmiernut (58) aufweist.

6. Verstellantrieb nach Anspruch 5, **dadurch gekennzeichnet, dass** die Schmiernut (58) zumindest abschnittweise spiralförmig ausgebildet ist.

7. Verstellantrieb nach Anspruch 6, **dadurch gekennzeichnet, dass** zwei Schmiernuten (58) gegensinnig spiralförmig ausgebildet sind.

8. Verstellantrieb nach einem der vorangehenden Ansprüche, **dadurch gekennzeichnet, dass** Schmiermittelaufnahmen (58) auf einer oder den beiden Zahnflanken (57) eines Gewindezahns (56) und/oder auf einer oder den beiden Nutflanken einer Gewindenut angeordnet sind.

9. Verstellantrieb nach einem der vorangehenden Ansprüche, **dadurch gekennzeichnet, dass** die Gewindespindel (52) und/oder die Spindelmutter (51) einen Kunststoff aufweisen.

10. Verstellantrieb nach einem der vorangehenden Ansprüche, **dadurch gekennzeichnet, dass** die Gewindespindel (52) und/oder die Spindelmutter (51) einen metallischen Werkstoff aufweisen.

11. Verstellantrieb nach einem der vorangehenden Ansprüche, **dadurch gekennzeichnet, dass** die Schmiermittelaufnahme (58) mit einem Schmiermittel gefüllt ist, bevorzugt mit einem Schmierfett.

12. Verstellantrieb nach einem der vorangehenden Ansprüche, **dadurch gekennzeichnet, dass** eine motorische Antriebseinheit (55) mit der Gewindespindel (52) oder der Spindelmutter (51) derart gekoppelt ist, dass die Gewindespindel (52) und die Spindelmutter (51) relativ zueinander drehend antreibbar sind.

13. Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (37) drehbar gelagert ist, und mit einem Verstellantrieb (5, 6), der eine Gewindespindel (52), die mit einem Außengewinde in eine Spindelmutter (51) eingreift, und eine Antriebseinheit (55) umfasst, der mit der Gewindespindel (52) oder der Spindelmutter (51) derart gekoppelt ist, dass die Gewindespindel (52) und die Spindelmutter (51) relativ drehend zueinander antreibbar sind, wobei der Verstellantrieb (5, 6) mit der Trageinheit (2) oder der Stelleinheit (3) verbunden ist,
**dadurch gekennzeichnet,**
**dass** der Verstellantrieb (5, 6) ausgebildet ist gemäß einem der Ansprüche 1 bis 12.

14. Lenksäule nach Anspruch 13, **dadurch gekennzeichnet, dass** ein Verstellantrieb (5, 6) als Rotationsspindeltrieb oder Tauchspindeltrieb ausgebildet ist.

15. Lenksäule nach einem der Ansprüche 13 oder 14, **dadurch gekennzeichnet, dass** sie als Steer-by-wire-Lenksäule ausgebildet ist.

## Claims

1. Adjustment drive (5) for a steering column (1) for a motor vehicle, comprising a threaded spindle (52) having an external thread, engaging with a corresponding internal thread of a spindle nut (51), wherein a thread tooth (56) of the external thread and a thread groove of the internal thread have corresponding axially sliding thread flanks (57) which are braced against each other,
**characterized in that**
at least one thread flank (57) comprises at least one recessed lubricant uptake (58).

2. Adjustment drive according to Claim 1, **characterized in that** the thread flanks comprise a tooth flank (57) of the thread tooth (56) and/or a groove flank of a thread groove.

3. Adjustment drive according to one of the preceding claims, **characterized in that** the lubricant uptake (58) is formed axially open at one end.

4. Adjustment drive according to one of the preceding claims, **characterized in that** each time a plurality of lubricant uptakes (58) are formed in one thread flank (57).

5. Adjustment drive according to one of the preceding claims, **characterized in that** the lubricant uptake (58) comprises an elongated lubrication groove (58).

6. Adjustment drive according to Claim 5, **characterized in that** the lubrication groove (58) has a spiral shape at least for a portion.

7. Adjustment drive according to Claim 6, **characterized in that** two lubrication grooves (58) are spiral shaped in opposite directions.

8. Adjustment drive according to one of the preceding claims, **characterized in that** lubricant uptakes (58) are arranged on one or both tooth flanks (57) of a thread tooth (56) and/or on one or both groove flanks of a thread groove.

9. Adjustment drive according to one of the preceding claims, **characterized in that** the threaded spindle (52) and/or the spindle nut (51) comprise a plastic.

10. Adjustment drive according to one of the preceding claims, **characterized in that** the threaded spindle (52) and/or the spindle nut (51) comprise a metallic material.

11. Adjustment drive according to one of the preceding claims, **characterized in that** the lubricant uptake (58) is filled with a lubricant, preferably with a grease.

12. Adjustment drive according to one of the preceding claims, **characterized in that** a motorized drive unit (55) is coupled to the threaded spindle (52) or the spindle nut (51) such that the threaded spindle (52) and the spindle nut (51) can be driven in rotation relative to each other.

13. Steering column (1) for a motor vehicle, having a support unit (2), which can be mounted on a vehicle chassis, and by which an actuator (3) is supported, in which a steering spindle (37) is rotatably mounted, and having an adjustment drive (5, 6), comprising a threaded spindle (52), engaging with an external thread in a spindle nut (51), and a drive unit (55), which is coupled to the threaded spindle (52) or the spindle nut (51) such that the threaded spindle (52) and the spindle nut (51) can be driven in rotation relative to each other, wherein the adjustment drive (5, 6) is connected to the support unit (2) or the actuator (3),
**characterized in that**
the adjustment drive (5, 6) is configured according to one of Claims 1 to 12.

14. Steering column according to Claim 13, **characterized in that** an adjustment drive (5, 6) is configured as a rotation spindle drive or a plunger spindle drive.

15. Steering column according to one of Claims 13 or 14, **characterized in that** it is configured as a steer-by-wire steering column.

## Revendications

1. Entraînement de réglage (5) pour une colonne de direction (1) pour un véhicule automobile, comprenant une broche filetée (52) avec un filetage extérieur qui s'engage dans un filetage intérieur correspondant d'un écrou de broche (51), une dent de filetage (56) du filetage extérieur et une rainure de filetage du filetage intérieur présentant des flancs de filetage (57) correspondants pouvant s'appuyer axialement l'un contre l'autre de manière coulissante,
**caractérisé en ce que**
qu'au moins un flanc de filet (57) présente au moins un logement de lubrifiant (58) en creux.

2. Entraînement de réglage selon la revendication 1, **caractérisé en ce que** les flancs de filet comprennent un flanc de dent (57) de la dent filetée (56) et/ou un flanc de rainure d'une rainure de filet.

3. Entraînement de réglage selon l'une des revendications précédentes, **caractérisé en ce que** le logement de lubrifiant (58) est ouvert axialement d'un côté.

4. Entraînement de réglage selon l'une des revendications précédentes, **caractérisé en ce qu'**une pluralité de logements de lubrifiant (58) est respectivement formée dans un flanc de filetage (57).

5. Entraînement de réglage selon l'une des revendications précédentes, **caractérisé en ce que** le logement de lubrifiant (58) présente une rainure de lubrification (58) allongée.

6. Entraînement de réglage selon la revendication 5, **caractérisé en ce que** la rainure de lubrification (58) est réalisée au moins par sections en forme de spirale.

7. Entraînement de réglage selon la revendication 6, **caractérisé en ce que** deux rainures de lubrification (58) sont réalisées en forme de spirale en sens inverse.

8. Entraînement de réglage selon l'une des revendications précédentes, **caractérisé en ce que** des logements de lubrifiant (58) sont disposés sur un ou les deux flancs de dent (57) d'une dent filetée (56) et/ou sur un ou les deux flancs de rainure d'une rainure filetée.

9. Entraînement de réglage selon l'une des revendications précédentes, **caractérisé en ce que** la tige filetée (52) et/ou l'écrou de tige (51) présentent une matière plastique.

10. Entraînement de réglage selon l'une des revendications précédentes, **caractérisé en ce que** la tige filetée (52) et/ou l'écrou de tige (51) présentent un matériau métallique.

11. Entraînement de réglage selon l'une des revendications précédentes, **caractérisé en ce que** le logement de lubrifiant (58) est rempli d'un lubrifiant, de préférence d'une graisse lubrifiante.

12. Entraînement de réglage selon l'une des revendications précédentes, **caractérisé en ce qu'**une unité d'entraînement motorisée (55) est couplée à la broche filetée (52) ou à l'écrou de broche (51) de telle sorte que la broche filetée (52) et l'écrou de broche (51) peuvent être entraînés en rotation l'un par rapport à l'autre.

13. Colonne de direction (1) pour un véhicule automobile, comprenant une unité de support (2) qui peut être montée sur une carrosserie de véhicule et par laquelle est maintenue une unité de réglage (3) dans laquelle un arbre de direction (37) est logé de manière rotative, et comprenant un entraînement de réglage (5, 6) qui comprend une broche filetée (52) qui s'engage par un filetage extérieur dans un écrou de broche (51), et une unité d'entraînement (55) qui est couplée à la broche filetée (52) ou à l'écrou de broche (51) de telle sorte que la broche filetée (52) et l'écrou de broche (51) peuvent être entraînés en rotation l'un par rapport à l'autre, l'entraînement de réglage (5, 6) étant relié à l'unité de support (2) ou à l'unité de réglage (3), **caractérisé en ce que**
**en ce que** l'entraînement de réglage (5, 6) est réalisé selon l'une des revendications 1 à 12.

14. Colonne de direction selon la revendication 13, **caractérisée en ce qu'**un entraînement de réglage (5, 6) est réalisé sous forme d'entraînement à broche rotative ou d'entraînement à broche plongeante.

15. Colonne de direction selon l'une des revendications 13 ou 14, **caractérisée en ce qu'**elle est réalisée sous forme de colonne de direction steer-by-wire.
